Europäisches Patentamt

European Patent Office

Office européen des brevets

(11) Veröffentlichungsnummer : **0 133 417**
**B1**

(12) **EUROPÄISCHE PATENTSCHRIFT**

(45) Veröffentlichungstag der Patentschrift :
**23.12.87**

(21) Anmeldenummer : **84810344.6**

(22) Anmeldetag : **13.07.84**

(51) Int. Cl.⁴ : **F 27 D   3/08**, F 27 D   3/00

(54) Verfahren und Vorrichtung zum Zuführen von Metall in eine Metallschmelze.

(30) Priorität : **04.08.83 CH 4229/83**

(43) Veröffentlichungstag der Anmeldung :
**20.02.85 Patentblatt 85/08**

(45) Bekanntmachung des Hinweises auf die Patenterteilung : **23.12.87 Patentblatt 87/52**

(84) Benannte Vertragsstaaten :
**AT CH DE FR GB IT LI SE**

(56) Entgegenhaltungen :
**EP-A- 0 030 220**
**FR-A-   804 883**
**FR-A- 1 505 148**
**FR-A- 2 355 079**
**GB-A- 2 051 597**
**GB-A- 2 080 692**

(73) Patentinhaber : **SCHWEIZERISCHE ALUMINIUM AG**
**CH-3965 Chippis (CH)**

(72) Erfinder : **Roggen, Rolf**
**Schlossgasse 29**
**CH-1950 Sion (CH)**

## Beschreibung

Die Erfindung betrifft ein Verfahren zum Zuführen von diskreten Metall seilchen in eine fliessende Metallschmelze, insbesondere zum Aufschmelzen von Metallschrott oder Krätzegranalien, sowie eine Vorrichtung hierfür.

Im Zeichen des Umweltschutzes und der Erkenntnis der begrenzten Verfügbarkeit von Rohstoffen wird in immer häufigerem Masse die Wiederaufbereitung von Rohstoffen gefordert. So auch bei Metall, welches in grossem Umfang sowohl bei Industrie- als auch Hausmüll anfällt. Insbesondere gilt dies für die Wiederaufbereitung des sog. Dosenschrotts, da heute Dosen aus Metall zur Aufnahme von Getränken verstärkt Verwendung finden.

Eine Möglichkeit der Wiederaufbereitung sieht vor, dass der Metallschrott einer Metallschmelze zugeführt und dort aufgeschmolzen wird. Dabei kommt es insbesondere darauf an, das feste Metall möglichst rasch in eine turbulente Schmelzeströmung einzutauchen, damit sich der Metallabbrand verringert und die Schmelzeleistung erhöht. Dem wiederum steht entgegen, dass beispielsweise dünnwandiges Metall wie Dosenschrott gegenüber der Schmelze eine wesentlich geringere Dichte aufweist, so dass seine Verweilzeit und sein Beharrungsvermögen auf der Schmelzebadoberfläche besonders gross sind. Dies läuft den obengenannten Bestrebungen des geringeren Metallabbrandes und der höheren Schmelzeleistung entgegen.

Aus der EP-A 30 220 ist ein Verfahren mit zugehöriger Vorrichtung bekannt, bei dem die Schmelze in einem Gefäss in Drehbewegung gebracht wird, so dass sich etwa in der Mitte der Schmelze ein Strudel bildet. Das aufzuschmelzende Metall wird in diesen Strudel eingegeben. In der Praxis hat sich gezeigt, dass das Metall weiterhin die Bestrebungen hat, auch im Strudel an der Oberfläche der Schmelze zu bleiben. Die erzeugten Turbulenzen lassen sowohl an der Schmelzebadoberfläche als auch an der Stelle, an welcher der Schrott dem Gefäss zugeführt wird, eine übermässige Menge an Krätze entstehen. Zudem ist der Wärmeübergang von der Schmelze zum Metall gering und demzufolge auch die Schmelzleistung unbefriedigend.

Der Erfinder hat sich deshalb zum Ziel gesetzt, ein Verfahren und eine Vorrichtung der obengenannten Art zu entwickeln, mittels welchen aufzuschmelzendes Metall möglichst rasch unter die Schmelzenoberfläche versenkt und damit möglichst rasch unter Luftabschluss gebracht wird. Weiterhin sollen das Verfahren und die Vorrichtung vielseitig anwendbar sein und insbesondere auch eine bessere Vermengung von zuzugebenden Legierungsbestandteilen ermöglichen. Zudem sollen Krätzegranalien mit einer grossen Metallausbeute ohne Salz umgeschmolzen werden können.

Die Lösung dieser Aufgabe erfolgt dadurch, dass die Metallschmelze in zwei Teilströme aufgeteilt wird, jeder Teilstrom in eine Drehbewegung um seine Fliessrichtung versetzt wird, wobei zwei gegensinnig zueinander drehende Schmelzewalzen entstehen, unter Bildung eines Winkels ihrer Fliessrichtungen zusammengeführt werden und im Bereich ihres Zusammentreffens eine die diskreten Metallteilchen einziehende Furche erzeugen, wobei die Metallteilchen an dieser Stelle zugegeben werden.

Sollen der Schrott, die Krätzegranalien oder die Legierungsbestandteile von oben dem Schmelzefluss zugeführt werden, so drehen sich nach Anspruch 2 die in Fliessrichtung gesehen linke Schmelzewalze im Uhrzeigersinn und die andere Schmelzewalze im Gegenuhrzeigersinn. Damit wird an der Stelle, an welcher die beiden Schmelzewalzen aufeinander treffen, eine Furche erzeugt, in welche der aufzuschmelzende Schrott, die Krätze bzw. die Legierungsbestandteile hineingesaugt werden. Auf diese Weise wird die Schmelze immer wieder durchmengt, es gibt keine ruhende Schmelzeoberfläche und dementsprechend kann sich auch kein Metallteil schwimmend auf dieser Oberfläche halten.

Sobald die beiden Schmelzewalzen aufeinander treffen, wird eine zusätzliche Turbulenz erzeugt, welche auch weiterhin das aufzuschmelzende Metall im innigen Kontakt mit der Schmelze hält. Ebenso wird die Durchmischung der festen und flüssigen Phasen der einzelnen Schmelzebestandteile gefördert. Nicht unerwähnt darf hierbei die Vernichtung der Oxidhäute bleiben. Sowohl die Wärmeübergangzahl als auch die Aufschmelzgeschwindigkeit wird wesentlich erhöht. Kurz nach dem Aufeinandertreffen der beiden Schmelzewalzen vernichtet sich dann die Rotationskomponente selbst und die Schmelze fliesst fast ruhig in den nachfolgenden Kanal oder eine nachfolgende Krätzeaufbereitungsstation.

Um die Metallschmelze in zwei sich gegenläufig drehende Schmelzewalzen zu versetzen, ist nach Patentanspruch 3 vorgesehen, dass die Teilströme der Metallschmelze zur Erzeugung der Drehbewegung etwa rechtwinklig zur Mittelachse sowie etwa tangential zum Querschnitt zweier Rohrabschnitte in diese eingeleitet werden. Nach Patentanspruch 4 kann dies zusätzlich oder alternativ auch dadurch erfolgen, dass die Teilströme der Metallschmelze durch elektromagnetische Kräfte in Drehbewegung versetzt werden.

Bei einer Vorrichtung zum Zuführen von diskreten Metallteilchen in eine fliessende Metallschmelze, insbesondere zum Aufschmelzen von Metallschrott oder Krätzegranalien, mit einer Leitung zum Führen der Schmelze sowie einer Oeffnung zum Zugeben der Metallteilchen, wie sie aus der EP-A 30 220 bekannt ist, ist erfindungsgemäss vorgesehen, dass zwei endwärts abgedeckte Rohrabschnitte mit ihren Mittelachsen einen Winkel einschliessen, an einer die Oeffnung aufweisenden Zugabestation ineinanderlaufen und auf der anderen Seite der Zugabestation die Leitung bilden, wobei in jeden der Rohrabschnitte etwa tangential zu seinem Querschnitt eine Zweigleitung einer Zuleitung für die Schmelze mündet, und/oder dass an den Rohrabschnitten Einrichtungen zur Erzeugung elektromagnetischer Kräfte angeordnet sind, so dass die Schmelze in den beiden Rohrabschnitten in zueinander gegenläufige Drehbewegungen um die Mittelachsen unter Bildung einer einziehenden Furche für die Metallteilchen an der Oeffnung versetzt wird.

Bei einer Weiterbildung dieser Vorrichtung können nach Patentanspruch 6 bei nach oben gerichteter Oeffnung für das Zuführen der Metallteilchen die Zweigleitungen und/oder die Einrichtungen zur Erzeugung elektromagnetischer Kräfte so angeordnet sein, dass die Drehrichtung in dem in Fliessrichtung linken Rohrabschnitt im Uhrzeigersinn und die Drehbewegung im anderen Rohrabschnitt gegensinnig verläuft.

In besonderer Weiterbildung sind nach Patentanspruch 7 die Einrichtungen an den Rohrabschnitten als drehbare Manschetten ausgebildet, deren Drehbewegung elektromagnetische Kräfte in der Schmelze der Rohrabschnitte induzieren.

Bei einer anderen Ausführungsform ist nach Patentanspruch 8 vorgesehen, dass die Zuleitung an einer Nahtstelle der beiden Rohrabschnitte einmündet. Durch den Rückstau der Schmelze sind auch die Rohrabschnitte mit Schmelze gefüllt. Die Manschetten wirken also durch elektromagnetische Kräfte auf die Schmelze ein und versetzen sie in Drehbewegung. Dadurch erhält man zwei stehende Schmelzewalzen, wobei der eingegebene Schrott durch die direkte Anstrahlung aus der Zuleitung nochmals verbessert benetzt und zwischen den beiden Schmelzewalzen weggedrückt wird.

Einer der wesentlichsten Vorteile der erfindungsgemässen Vorrichtung besteht darin, dass das Aufschmelzen fast unter Luftabschluss stattfindet. Hierdurch werden die Metallverluste infolge des geringeren Abbrands verringert, ebenso die Krätzebildung. Die hohe Relativgeschwindigkeit zwischen Fest- und Flüssigphase bewirkt, dass maximale Wärmeübergangszahlen erreicht werden können, d. h. die Aufschmelzgeschwindigkeit wird wesentlich erhöht. Bei den sehr geringen Ausmassen der Zugabestation sind ebenfalls die Wärmeverluste gering. Die Einfachheit der Vorrichtung lässt unwesentliche Investitionskosten und unwesentliche Kosten für den Unterhalt anfallen. Insgesamt erlaubt die Vorrichtung, dass nicht nur der übliche Metallschrott oder andere Abfälle aufgeschmolzen, sondern auch Zulegierungselemente oder andere Schmelzebehandlungselemente in beliebiger Form zugeführt werden können. Dies gilt in besonderem Masse für Krätzegranalien, welche von aufbereiteten Krätzen stammen und ohne Metallverlust sowie ohne Zugabe von Flussmitteln wie Salz umgeschmolzen werden.

Weitere Vorteile, Merkmale und Einzelheiten der Erfindung ergeben sich aus der nachfolgenden Beschreibung bevorzugter Ausführungsbeispiele sowie anhand der Zeichnung ; diese zeigt in

Fig. 1 eine Schrägsicht auf einen Teil einer teilweise geschnittenen Anlage zum Aufschmelzen von Metall ;

Fig. 2 eine Schrägsicht auf ein weiteres Ausführungsbeispiel nach Fig. 1.

Bei einer Anlage zum Aufschmelzen von Metall, beispielsweise von Dosenschrott, wird flüssige Schmelze 1 aus einem — nicht dargestellten — Ofen entnommen und in einer Zuleitung 2 einer Zugabestation R für das aufzuschmelzende Metall zugeführt. Von dort fliesst die Schmelze 1 dann in einen Kanal 3 zurück in den Ofen oder beispielsweise in eine Krätzeaufbereitungsstation.

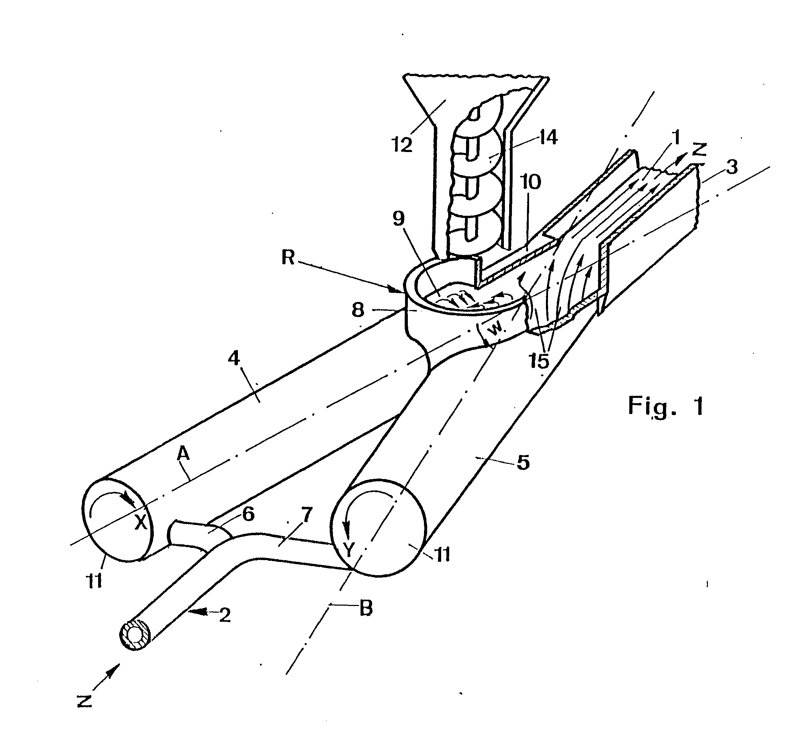

Die Zugabestation R besteht im wesentlichen nach Fig. 1 aus zwei Y-förmig angeordneten Rohrabschnitten 4 und 5, in welche jeweils eine Zweigleitung 6 und 7 der Zuleitung 2 etwa rechtwinklig zu einer Mittelachse A und B einmünden. Die Rohrabschnitte 4 und 5 treffen sich an einer als Einfüllstutzen 8 für das einzuschmelzende Metall ausgebildeten Oeffnung 9 und vereinigen sich dort zu einem Leitrohr 10, welches an die Leitung 3 anschliesst. Die Mittelachsen A und B der Rohrabschnitte 4, 5 verlaufen in einem Winkel w zueinander. Die Rohrabschnitte 4 und 5 sind andernends des Einfüllstutzens 8 durch Deckel 11 verschlossen.

Ueber dem Einfüllstutzen 8 bzw. der Oeffnung 9 ist ein Silo 12 angeordnet, aus dem mittels einer Schnecke 14 — nicht dargestelltes — einzuschmelzendes Metall der Schmelze 1 durch die Oeffnung 9 zugeführt wird.

Die Schmelze 1 gelangt über die Zuleitung 2 in die Rohrabschnitte 4 und 5. Da sie etwa rechtwinklig und zudem etwa tangential zum Rohrquerschnitt durch die Zweigleitungen 6 und 7 in die Rohrabschnitte 4 und 5 einschiesst, gerät sie in eine innerhalb der Rohrabschnitte 4 und 5 um deren Mittelachsen A und B kreisende Bewegung.

Die Zugaberichtung bewirkt, dass die Schmelze 1 im Rohrabschnitt 4 im Uhrzeigersinn eine Drehbewegung x durchführt während sie im Rohrabschnitt 5 gegen den Uhrzeigersinn eine Drehbewegung y durchführt Beide so erzeugten Schmelzewalzen treffen unterhalb des Silos 12 an der Oeffnung 9 zusammen. Durch die Pfeile 15 ist der weitere Weg der Schmelze 1 angedeutet. Wird nun Metall aus dem Silo 12 zugegeben, gerät es in eine von den Schmelzewalzen gebildete, der Uebersichtlichkeit halber nur durch die Pfeile 15 angedeutete Furche und wird sofort von der Schmelze eingesaugt und vollkommen benetzt. Beim Zusammentreffen beider Schmelzewalzen vernichten sich diese von allein, was die Durchmischung der festen Metallbestandteile und der flüssigen Schmelze 1 noch fördert. Im Leitrohr 10 erlischt dann die Rotationskomponente, und die Schmelze fliesst ruhig in ein nachfolgendes — nicht dargestelltes — Krätzeaufbereitungsgefäss od. dgl.

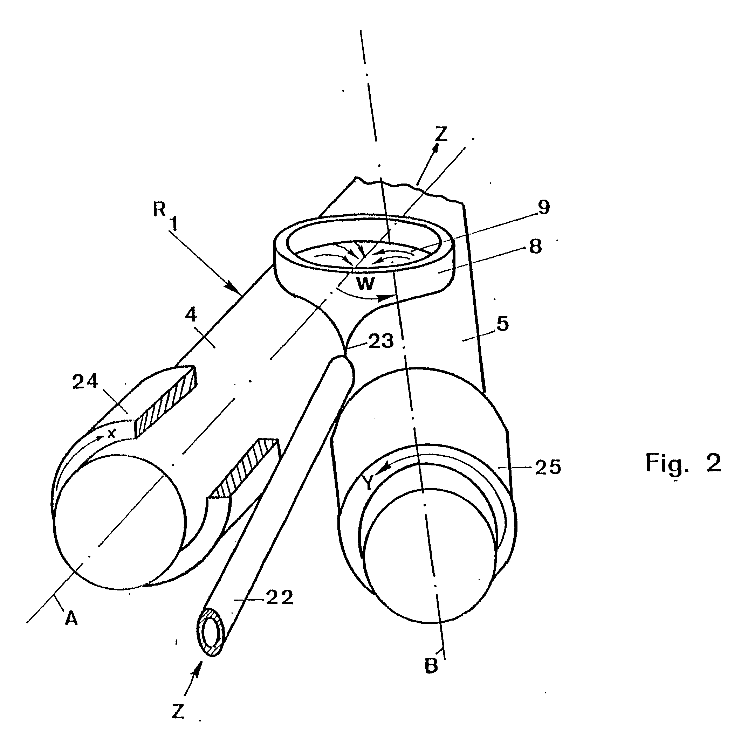

In dem Ausführungsbeispiel nach Fig. 2 besteht die Zugabestation R₁ ebenfalls aus zwei verschlossenen Rohrabschnitten 4 und 5, deren Mittelachsen A und B einen Winkel w zueinander bilden und an deren Treffpunkt eine Oeffnung 9 nebst Einfüllstutzen 8 für aufzuschmelzendes Metall angeordnet ist. Die Schmelze wird hier durch eine Zuleitung 22 in Schmelzfliessrichtung z direkt durch die Nahtstelle 23 der beiden Rohrabschnitte 4 und 5 unterhalb des Einfüllstutzens 8 eingeleitet.

An beiden Rohrabschnitten 4 und 5 wird jeweils mittels einer als Stator wirkenden Manschette 24 und 25, die als Einrichtungen zur Erzeugung elektromagnetischer Kräfte wirken, ein Drehfeld in der Schmelze induziert, wobei die Schmelze im Rohrabschnitt 4 im Uhrzeigersinn, aber gegenläufig zur Schmelze im Rohrabschnitt 5 dreht. Die Drehung der Schmelze kann beispielsweise auch dadurch bewirkt werden, dass die Rohrabschnitte 4 und 5 mit Rotoren eines nicht näher dargestellten Motors versehen sind.

Dadurch entstehen wieder zwei gegenläufige Schmelzewalzen mit der oben beschrieben Wirkung für die Aufnahme von aufzuschmelzendem Metall.

Die Manschetten 24 und 25 der elektromagnetischen Einrichtungen können auch der Unterstützung der Walzenbildung nach dem Ausführungsbeispiel der Zugabestation R in Fig. 1 dienen.

## Patentansprüche

1. Verfahren zum Zuführen von diskreten Metallteilchen in eine fliessende Metallschmelze, insbesondere zum Aufschmelzen von Metallschrott oder Krätzegranalien, dadurch gekennzeichnet, dass die Metallschmelze in zwei Teilströme aufgeteilt wird, jeder Teilstrom in eine Drehbewegung um seine Fliessrichtung versetzt wird, wobei zwei gegensinnig zueinander drehende Schmelzewalzen entstehen, dass die beiden Schmelzewalzen unter Bildung eines Winkels ihrer Fliessrichtungen zusammengeführt werden und im Bereich ihres Zusammentreffens eine die diskreten Metallteilchen einziehende Furche erzeugen, wobei die Metallteilchen an dieser Stelle zugegeben werden.

2. Verfahren nach Anspruch 1, dadurch gekennzeichnet, dass sich bei einer Zugabe der Metallteilchen von oben die in Fliessrichtung gesehen linke Schmelzewalze im Uhrzeigersinn und die andere Schmelzewalze im Gegenuhrzeigersinn drehen.

3. Verfahren nach Anspruch 1 oder 2, dadurch gekennzeichnet, dass die Teilströme der Metallschmelze zur Erzeugung der Drehbewegung etwa rechtwinklig zur Mittelachse sowie etwa tangential zum Querschnitt zweier Rohrabschnitte in diese eingeleitet werden.

4. Verfahren nach einem der Ansprüche 1 bis 3, dadurch gekennzeichnet, dass die Teilströme der Metallschmelze durch elektromagnetische Kräfte in Drehbewegung versetzt werden.

5. Vorrichtung zum Zuführen von diskreten Metallteilchen in eine fliessende Metallschmelze, insbesondere zum Aufschmelzen von Metallschrott oder Krätzegranalien, mit einer Leitung zum Führen der Schmelze sowie einer Oeffnung zum Zugeben der Metallteilchen, dadurch gekennzeichnet, dass zwei endwärts abgedeckte Rohrabschnitte (4, 5) mit ihren Mittelachsen (A, B) einen Winkel (w) einschliessen, an einer die Oeffnung (9) aufweisenden Zugabestation (R) ineinanderlaufen und auf der anderen Seite der Zugabestation (R) die Leitung (3) bilden, wobei in jeden der Rohrabschnitte (4, 5) etwa tangential zu seinem Querschnitt eine Zweigleitung (6 bzw. 7) einer Zuleitung (2) für die Schmelze (1) mündet, und/oder dass an den Rohrabschnitten Einrichtungen (24, 25) zur Erzeugung elektromagnetischer Kräfte angeordnet sind, so dass die Schmelze (1) in den beiden Rohrabschnitten (4, 5) in zueinander gegenläufige Drehbewegungen (x, y) um die Mittelachsen (A, B) unter Bildung einer einziehenden Furche für die Metallteilchen an der Oeffnung (9) versetzt wird.

6. Vorrichtung nach Anspruch 5, dadurch gekennzeichnet, dass bei nach oben gerichteter Oeffnung (9) für das Zuführen der Metallteilchen die Zweigleitungen (6, 7) und/oder die Einrichtungen (24, 25) zur Erzeugung elektromagnetischer Kräfte so angeordnet sind, dass die Drehbewegung (x) in dem in Fliessrichtung (z) linken Rohrabschnitt (4) im Uhrzeigersinn und die Drehbewegung (y) im anderen Rohrabschnitt (5) gegensinnig verläuft.

7. Vorrichtung nach Anspruch 5 oder 6, dadurch gekennzeichnet, dass die Einrichtungen (24, 25) an den Rohrabschnitten (4, 5) als drehbare Manschetten ausgebildet sind, deren Drehbewegung (x, y) elektromagnetische Kräfte in der Schmelze (1) der Rohrabschnitte (4, 5) induzieren.

8. Vorrichtung nach Anspruch 7, dadurch gekennzeichet, dass die Zuleitung (22) für die Schmelze (1) an einer Nachtstelle (23) der beiden Rohrabschnitte (4, 5) einmündet (Fig. 2).

## Claims

1. Process for feeding discrete metal particles into a flowing metal melt, especially for melting metal scrap or waste metal granules, characterised in that the metal melt is divided up into two component streams, each component stream is set into a rotating movement about its direction of flow whereby two melt rolls rotating in opposite directions to one another are produced, in that the two melt rolls are conducted together, an angle of their directions of flow being formed, and generate in the region where they meet a furrow drawing in the discrete metal particles, the metal particles being added at this position.

2. Process according to Claim 1, characterised in that in the case of adding of the metal particles from above the left melt roll, seen in the direction of flow, rotates in the clockwise direction and the other melt roll rotates in the counter-clockwise direction.

3. Process according to Claim 1 or 2, characterised in that the component streams of the metal melt, for the generation of the rotating movement, are introduced into two pipe sections approximately at right angles to the central axis and approximately tangentially to the cross-section of the two pipe sections.

4. Process according to one of Claims 1 to 3, characterised in that the component streams of the metal melt are set in rotating movement by electro-magnetic forces.

5. Device for feeding discrete metal particles into a flowing metal melt, especially for melting metal scrap or waste metal granules, with a conduit for conducting the melt and an opening for the addition of the metal particles, characterised in that two pipe sections (4, 5) covered at the ends include an angle (w) with their central axes (A, B), run into one another at an addition station (R) comprising the opening (9) and on the other side of the addition station (R) form the conduit (3), while a branch conduit (6 and 7 respectively) of a supply conduit (2) for the melt (1) opens into each of the pipe sections (4, 5) approximately tangentially to its cross-section, and/or in that devices (24, 25) for the generation of electro-magnetic forces are arranged on the pipe sections so that the melt (1) is set in the two pipe sections (4, 5) into mutually opposite rotating movements (x, y) about the central axes (A, B) with formation of a furrow drawing in the metal particles, at the opening (9).

6. Device according to Claim 5, characterised in that with the opening (9) for the supply of the metal particles directed upwards, the branch conduits (6, 7) and/or the devices (24, 25) for the generation of electro-magnetic forces are so arranged that the rotating movement (x) in the pipe section (4) on the left in the direction (z) of flow proceeds in the clockwise direction and the rotating movement (y) in the other pipe section (5) proceeds in the opposite direction.

7. Device according to Claim 5 or 6, characterised in that the devices (24, 25) on the pipe sections (4, 5) are formed as rotatable sleeves the rotating movements (x, y) of which induce electro-magnetic forces in the melt (1) of the pipe sections (4, 5).

8. Device according to Claim 7, characterised in that the supply conduit (22) for the melt (1) enters at a seam position (23) of the two pipe sections (4, 5) (figure 2).

**Revendications**

1. Procédé d'introduction d'une distribution discontinue de particules métalliques dans un bain de fusion métallique en écoulement, en particulier pour fondre des riblons de métal ou des grenailles de crasse, caractérisé en ce que le bain de fusion métallique se divise en deux courants partiels, chaque courant partiel étant entraîné dans un mouvement de rotation autour de sa direction d'écoulement, étant précisé qu'il apparaît deux cylindres de bain de fusion tournant en sens inverse l'un de l'autre ; en ce que les deux cylindres de bain de fusion se réunissent, leurs directions d'écoulement formant un angle, et produisent dans la zone de leur rencontre, un sillon qui aspire la distribution discontinue de particules métalliques, étant précisé que c'est à cet endroit que l'on amène les particules métalliques.

2. Procédé selon la revendication 1, caractérisé en ce que, dans le cas d'un apport des particules métalliques de par en haut, le cylindre de bain métallique de gauche, vu dans la direction de l'écoulement, tourne sens horaire et l'autre cylindre de bain métallique, sens antihoraire.

3. Procédé selon la revendication 1 ou 2, caractérisé en ce que l'on introduit les courants partiels du bain de fusion métallique dans les deux tronçons tubulaires de façon à obtenir un mouvement de rotation à peu près perpendiculaire à l'axe et à peu près tangentiel à la section de ces tronçons tubulaires.

4. Procédé selon l'une des revendications 1 à 3, caractérisé en ce que les courants partiels du bain de fusion métallique sont entraînés en rotation par des forces électromagnétiques.

5. Dispositif d'introduction d'une distribution discontinue des particules métalliques dans un bain de fusion métallique en écoulement en particulier pour fondre des riblons de métal ou des grenailles de crasse, comportant une conduite d'arrivée du bain de fusion ainsi qu'une ouverture pour amener les particules métalliques, caractérisé en ce que deux tronçons tubulaires (4, 5) obturés à leur extrémité forment, par leurs axes (A, B), un angle (W), arrivent l'un dans l'autre à une station d'amenée (R) qui présente une ouverture (9) et forment, de l'autre côté de la station d'amenée (R), la conduite (3), étant précisé que dans chacun des tronçons tubulaires (4, 5) débouche, à peu près tangentiellement à la section de ce tronçon, une conduite d'embranchement (6 et 7) d'une conduite d'amenée (2) pour le bain de fusion (1) ; et/ou en ce que sur les tronçons tubulaires sont disposés des dispositifs (24, 25) de production de forces électromagnétiques, de sorte que le bain de fusion (1) est entraîné dans les deux tronçons tubulaires (4, 5) dans des mouvements de rotation (x, y), autour des axes (A, B), en sens inverse l'un de l'autre, en formant un sillon qui aspire les particules métalliques à l'ouverture (9).

6. Dispositif selon la revendication 5, caractérisé en ce que, dans le cas d'une ouverture (9) pour l'introduction des particules métalliques dirigée vers le haut, les conduites d'embranchement (6, 7) et/ou les dispositifs (24, 25) de production des forces électromagnétiques sont disposés de façon que le mouvement de rotation (x) se fasse sens horaire dans le tronçon tubulaire (4) de gauche, vu dans la direction de l'écoulement (z) et que le mouvement de rotation (y) se fasse en sens inverse dans l'autre tronçon tubulaire (5).

7. Dispositif selon la revendication 5 ou 6, caractérisé en ce que les dispositifs (24, 25) prévus sur les tronçons tubulaires (4, 5) sont conçus sous forme de manchons tournants dont les mouvements de rotation (x, y) induisent des forces électromagnétiques dans le bain de fusion (1) des tronçons tubulaires (4, 5).

8. Dispositif selon la revendication 7, caractérisé en ce que la conduite d'amenée (22) pour le bain de fusion (1) débouche à une jonction (23) des deux tronçons tubulaires (4, 5) (figure 2).

Fig. 1

Fig. 2

0 133 417